# EUROPÄISCHE PATENTSCHRIFT

(11) **EP 3 168 169 B1**
(45) Veröffentlichungstag und Bekanntmachung des Hinweises auf die Patenterteilung: **05.02.2020**
(21) Anmeldenummer: 15194573.0
(22) Anmeldetag: 13.11.2015
(51) Int. Cl.: B65D 33/02, B65D 75/00

(54) **FOLIENBEUTEL**
PLASTIC FILM BAG
SACHET PLASTIQUE

(43) Veröffentlichungstag der Anmeldung: 17.05.2017
(73) Patentinhaber: Mondi AG, 1030 Wien (AT); Werner & Mertz GmbH, 55120 Mainz (DE)
(72) Erfinder: Luccese, Michele, 55122 Mainz (DE); Sander, Immo, 65195 Wiesbaden (DE); Perick, Matthias, 48683 Ahaus-Alstätte (DE); Kösters, Jens, 49134 Wallenhorst (DE)
(74) Vertreter: Lorenz, Bernd Ingo Thaddeus

(56) Entgegenhaltungen:
- EP-A2- 0 469 904
- WO-A1-03/097473
- WO-A1-2015/004312
- WO-A2-2009/131514
- WO-A2-2012/148895
- JP-U- H0 584 640
- US-B1- 6 749 910

## Beschreibung

Die vorliegende Erfindung betrifft einen Folienbeutel, insbesondere einen Folienverpackungsbeutel mit einem Beutelkörper und mit einem zusätzlichen, mit einem Aufdruck versehenen Folienabschnitt, der an einer Beutelaußenseite auf dem Beutelkörper angeordnet ist, wobei der Beutelkörper zumindest zwei einander gegenüberliegende Frontwände aus einer Beutelfolie aufweist, welche von einem oberen Beutelrand, einem unteren Beutelrand und Seitenrändern begrenzt sind und wobei der Folienabschnitt und die Beutelfolie nicht vollflächig miteinander verbunden sind. Der zusätzliche, mit einem Aufdruck versehene Folienabschnitt ist an zumindest einer der Frontwände mit einem Abstand zu dem oberen Beutelrand und zu dem unteren Beutelrand angeordnet.

Die vorliegende Erfindung betrifft damit einen Folienbeutel, der aus zumindest zwei nicht vollflächig miteinander verbundenen Folienmaterialen gebildet ist.

Ein solcher Aufbau wird gemäß dem Stand der Technik häufig dazu eingesetzt, um einen befüllten, dichtverschlossenen Beutelkörper aus einer dünnen Folie zu stabilisieren. Der Beutelkörper bildet dann einen inneren Teil der Verpackung, wobei der separate Folienabschnitt zur Versteifung und Abstützung der Anordnung dient. Entsprechende Folienbeutel sind beispielsweise aus den Druckschriften DE 19 60 577 C3, EP 1 053 951 B1, DE 22 15 350 A, WO 03/097473 A1, EP 1 714 892 A2 und WO 2009/131514 A2 bekannt.

Bei den bekannten Ausführungen ist es wesentlich, dass der zusätzliche Folienabschnitt steif ist und insbesondere auch den Boden des Beutelkörpers abstützt.

Bei den beschriebenen Ausgestaltungen ist der Beutelkörper zum Teil von dem separaten Folienabschnitt bzw. der daraus gebildeten Tragekonstruktion trennbar. Für den separaten Folienabschnitt bzw. die daraus gebildete Tragekonstruktion ergibt sich aber ein sehr großer Materialaufwand, weshalb die bekannten Ausführungen auch aus ökologischer Sicht nachteilig sind, selbst wenn der verschlossene Beutelkörper aus einem vergleichsweise dünnen Folienmaterial gebildet werden kann. Darüber hinaus ist der deutlich erkennbare zweiteilige Aufbau aus Sicht eines Verbrauchers wenig ästhetisch.

Herkömmliche Folienverpackungsbeutel werden in der Praxis als Massenartikel eingesetzt, wobei der typische Aufbau solcher Folienverpackungsbeutel beispielsweise aus der EP 2 032 454 B1 sowie der EP 2 364 848 B1 bekannt ist.

Häufig ist als Material für die Beutelwand ein Kaschierverbund mit einer Innenfolie aus Polyethylen (PE) und einer Außenfolie auf der Basis von Polyethylenterephthalat (PET) oder biaxial orientiertem Polypropylen (BO-PP) vorgesehen, wobei eine Druckschicht bei einem solchen Kaschierverbund vor dem Verkleben der Innenfolie mit der Außenfolie innenliegend an der Kontaktfläche entweder auf die Außenfolie oder die Innenfolie aufgebracht wird und dann durch die transparente Außenfolie sichtbar ist.

Derartige Folienverpackungsbeutel zeichnen sich durch ein besonders hochwertiges Erscheinungsbild und gute Funktionseigenschaften aus. Allerdings ist aufgrund der Kaschierung der unterschiedlichen Polymermaterialien ein sortenreines Kunststoff-Recycling nicht möglich, weshalb entsprechende Folienverpackungsbeutel als Einweg-Artikel nach ihrer Benutzung allenfalls verbrannt und damit thermisch verwertet werden können.

Kunststoffabfälle, die durch ein Zerkleinern in jeweils sortenreine Partikel aufgeteilt werden können, werden in der Praxis häufig durch geeignete Sortiereinrichtungen voneinander getrennt und in Abhängigkeit ihres spezifischen Gewichtes bzw. ihrer Dichte aufgetrennt, wobei sowohl eine dynamische Aufteilung der Fraktionen in einer Strömung oder statische Verfahren in Betracht kommen.

Eine besondere einfache Trennung ist möglich, wenn jeweils für sich sortenreine Kunststoffpartikel in einen mit Wasser gefüllten Trenntank eingebracht werden, wobei dann Partikel, die leichter als Wasser sind, aufschwimmen und schwerere Partikel absinken. Entsprechende Einrichtungen werden demnach auch als Schwimm-Sink-Tank bezeichnet und können beispielsweise Polyethylenterephthalat (PET) oder Polyvinylchlorid (PVC) mit jeweils einer Dichte größer 1 g/cm³ von üblichen Polyolefinen wie Polyethylen (PE) oder Polypropylen (PP) trennen, die - zumindest in der üblichen Ausführung - eine Dichte von weniger als 1 g/cm³ aufweisen. Ein Verfahren und eine Vorrichtung zur Trennung von heterogenen Kunststoffen in homogene Fraktionen ist beispielsweise aus der EP 0 469 904 B1 bekannt.

Im Bereich von Folienverpackungsbeuteln sind auch für bestimmte Anwendungsfälle, beispielsweise die Aufnahme von Streusalz, einfache sortenreine Ausführungen bekannt, die dann an ihrer Außenseite bedruckt werden. Entsprechende Ausführungen werden von einem Benutzer jedoch als wenig hochwertig angesehen und weisen in der Regel auch relativ schlechte Funktionseigenschaften auf. Ein von außen aufgebrachter Aufdruck ist nicht gegen Abrieb geschützt, so dass auch deshalb kein hochwertiges Erscheinungsbild erreicht werden kann.

Die Druckschriften DE 41 05 949 A1, DE 92 13 804 U1 und DE 93 01 234 U1 beschäftigen sich mit der Aufgabe, Schichtmaterialen aus verschiedenen Kunststoffen entweder durch Lösungsmittel oder mechanisch in seine Bestandteile aufzuteilen.

Weitere Verfahren zum Zerlegen und sortenreinen Trennen von Verbundstoffen aus Kunststoff sind aus der EP 801 163 B1, EP 1 036 596 B1, CH 696 295 A5 sowie EP 2 371 508 B1 bekannt, wobei jeweils ein erheblicher verfahrenstechnischer Aufwand notwendig ist, um durch eine physikalische und/oder chemische Verarbeitung der wiederzuverwertenden Produkte eine stoffliche Trennung zu erreichen.

Vor diesem Hintergrund liegt der vorliegenden Erfindung die Aufgabe zugrunde, einen Folienbeutel, insbesondere einen Folienverpackungsbeutel, anzugeben, der einen einfachen Aufbau sowie gute Funktionseigenschaften aufweist und - zumindest zu einem großen Anteil - leicht wiederverwertet werden kann.

Gegenstand der Erfindung und Lösung der Aufgabe ist ein Folienbeutel gemäß Patentanspruch 1.

Erfindungsgemäß dient der zusätzliche Folienabschnitt nicht oder zumindest nicht hauptsächlich zu einer Verstärkung des Beutelkörpers sondern zur Aufnahme eines Aufdrucks, während der Beutelkörper selbst vorzugsweise nicht bedruckt ist. Der sich lediglich über einen Teil der Fläche der Frontwand erstreckende separate Folienabschnitt ist ausreichend, um bei einem Folienverpackungsbeutel die für einen Benutzer relevanten Informationen, ein individuelles Design oder andere Gestaltungen aufzunehmen.

Ausgehend von einem Folienbeutel mit den eingangs beschriebenen Merkmalen ist es erfindungsgemäß vorgesehen, dass der Folienabschnitt an zumindest einer der Frontwände mit einem Abstand zu dem oberen Beutelrand und dem unteren Beutelrand angeordnet ist, dass der Folienabschnitt eine Dicke zwischen 20 µm und 100 µm aufweist und dass das Verhältnis der Dicke der Beutelfolie zu der Dicke des Folienabschnittes größer als 2:1 ist.

Durch die beschriebenen Merkmale wird auch nach einem Zerkleinern des Folienbeutels einem Recyceln eine Trennung durch ein Windsichten aufgrund der unterschiedlichen Materialstärken möglich. Das deutlich und zumindest um einen Faktor 2 dünnere Material des Folienabschnittes kann bei einem Windsichten leicht von der zerkleinerten Beutelfolie entfernt werden. Ein Aufdruck ist auch im Rahmen der beschriebenen zweiten Variante nur an dem Folienabschnitt angebracht, so dass die aus der Beutelfolie bei einem Recycling gebildete Fraktion ohne Probleme wiederverwendet werden kann.

Besonders bevorzugt ist eine Ausgestaltung eines Folienbeutels, bei dem eine unterschiedliche Materialstärke zwischen der Beutelfolie und des Folienabschnitts vorgesehen ist. Es wird dann ein Folienbeutel gebildet, der auf unterschiedliche Arten recycelt werden kann, so dass für eine solche besonders bevorzugte Ausgestaltung der genauere Recyclingprozess im Vorhinein nicht festgelegt werden muss.

Im Rahmen der Erfindung ist der Beutelkörper alleine ausreichend, um dem Folienbeutel die notwendige Stabilität zu geben. Wenn es sich um einen Standbeutel handelt, ist der Beutelkörper vorzugsweise auch ohne den zusätzlichen Folienabschnitt selbsttragend. Im Rahmen der Erfindung kann der Beutelkörper alleine von den beiden Frontwänden nach Art eines Kissens gebildet sein. Alternativ können aber auch Seitenfalten und/oder eine Bodenfalte vorgesehen sein, die dann vorzugsweise auch von der Beutelfolie gebildet sind, so dass dann der gesamte Beutelkörper aus der Beutelfolie besteht.

Insbesondere ist vorgesehen, dass der Beutelkörper als Hauptbestandteil gut recycelt werden kann, während eine Entsorgung des kleineren Folienabschnittes in Kauf genommen werden kann.

Vor diesem Hintergrund ist es von Vorteil, wenn der Materialeinsatz für den zusätzlichen Folienabschnitt vergleichsweise gering ist. Vorzugsweise erstreckt sich der Folienabschnitt über weniger als 50 % der Fläche der darunter angeordneten Frontwand bzw. der darunter angeordneten Frontwände. Erfindungsgemäß ist die Dicke zwischen 20 µm und 170 µm, wobei die Dicke vorzugsweise kleiner als 120 µm, insbesondere kleiner 60 µm ist. Die Ausgestaltung des Folienabschnittes mit einer geringen Dicke von beispielsweise zwischen 30 µm und 60 µm ist möglich, weil im Rahmen der Erfindung keine oder allenfalls eine unterstützende tragende Funktion durch den Folienabschnitt zu erfüllen ist.

Wie zuvor beschrieben, weist der Folienabschnitt einen Abstand zu dem oberen Beutelrand und dem unteren Beutelrand auf. Der Abstand beträgt üblicherweise zumindest 1 cm, vorzugsweise zumindest 3 cm, besonders bevorzugt zumindest 5 cm.

Um eine gute Wiederverwertung des Beutelkörpers zu ermöglichen, kann dieser sortenrein hergestellt sein. Bevorzugt sind Polyolefine wie Polyethylen (PE) oder Polypropylen (PP). Als sortenrein wird die Beutelfolie insbesondere dann bezeichnet, wenn diese gemäß der deutschen Verordnung über die Vermeidung und Verwertung von Verpackungsabfällen (Verpackungsordnung - VerpackV) gemäß Anhang IV. klassifiziert werden kann, wobei beispielsweise die Recycling-Nummer 02 HDPE (Polyethylen hoher Dichte), Recycling-Nummer 04 LDPE (Polyethylen niedriger Dichte) und Recycling-Nummer 05 PP (Polypropylen) zugeordnet sind. Je nach Verwendungszweck können aber auch Polyethylene bzw. Polypropylene mit unterschiedlichen Dichten als Blend oder in einer mehrschichtigen Beutelfolie vorgesehen sein.

Dabei ist zu berücksichtigen, dass der Beutelkörper mit seinen Frontwänden vorzugsweise durch Heißsiegelnähte geformt und verschlossen wird. Bei einer mehrschichtigen Ausgestaltung der Beutelfolie kann dazu eine heißsiegelbare Innenschicht vorgesehen werden, die sich leicht aufschmelzen lässt und eine gute Versiegelung ermöglicht, während eine gegenüberliegende Außenseite bei einem Heißsiegelprozess nicht beeinträchtigt wird. Die Beutelfolie kann dazu beispielsweise mehrschichtig coextrudiert werden, wobei dann für die einzelnen Schichten unterschiedliche Typen und/oder Blends entweder von Polypropylen oder von Polyethylen eingesetzt werden können.

Erfindungsgemäß sind der zusätzliche Folienabschnitt und die Beutelfolie nicht vollflächig miteinander verbunden. Vorzugsweise verbleiben große unverbundene Bereiche, so dass nach einem Zerkleinern dann die dort entstehenden Partikel vollständig voneinander getrennt werden können. Bevorzugt liegen, dort wo der zusätzliche Folienabschnitt vorhanden ist, große unverbundene Bereiche vor, welche eine quadratische Fläche von zumindest 10 cm² aufweisen. Vorzugsweise ist lediglich ein geringer Flächenanteil des Folienabschnitts von beispielsweise weniger als 10 %, vorzugsweise weniger als 5 % mit der Beutelfolie verbunden. Wie nachfolgend noch im Detail erläutert, können der Folienabschnitt und die Beutelfolie auch nur formschlüssig miteinander verbunden werden, so dass dann bei einer ausreichenden Zerkleinerung sogar eine vollständige Trennung möglich wird.

Anders als bei einem einfachen Etikett erstreckt sich der Folienabschnitt an zumindest einer der Frontwände vorzugsweise über die gesamte Breite zwischen den Seitenrändern. An den Seitenrändern kann dann der Folienabschnitt auf unterschiedliche Weise an seitlichen Siegelnähten befestigt sein bzw. an den Siegelnähten enden. Zumindest erstreckt sich der Folienabschnitt dann an der zugeordneten Frontwand zwischen den seitlichen Siegelnähten. Vorzugsweise ist der Folienabschnitt zwischen den so gebildeten Seitenrändern unverbunden mit der zugeordneten Frontwand.

Im Rahmen der Erfindung kann der Folienabschnitt lediglich an einer Frontwand vorgesehen sein, was für eine Kennzeichnung und Markierung grundsätzlich ausreichend sein kann. Vorzugsweise erstreckt sich der Folienabschnitt jedoch an beiden Frontwänden und bildet dann eine Art Banderole. Dabei liegt es auch im Rahmen der Erfindung, eine umfangsseitig geschlossene Banderole zu bilden.

Der Folienabschnitt kann auf einfache Weise an den zuvor beschriebenen Längssiegelnähten befestigt sein, die entlang der Seitenränder verlaufen. Bei einer geeigneten Materialauswahl kann der Folienabschnitt mit seiner innenliegenden Seite mit der Außenseite der Frontwände verschmolzen werden. Die so verbundenen Bereiche können dann bei einer festen Versiegelung nicht mehr getrennt werden, so dass dann auch diese vergleichsweise kleinen Abschnitte nicht mehr getrennt entsorgt werden können. Das Gleiche gilt, wenn die Beutelfolie und der Folienabschnitt mit einem nicht löslichen Klebstoff verbunden sind. Vor diesem Hintergrund ist es vorzugsweise vorgesehen, dass bei einer festen Versiegelung der Folienabschnitt an dem versiegelten Bereich nicht bedruckt ist. Wie auch nachfolgend beschrieben, kann ein Dichteunterschied dadurch erreicht werden, dass im Vergleich zu der den Beutelkörper bildenden Beutelfolie ein grundlegend anderes Material eingesetzt wird oder zusätzlich Füllstoffe eingesetzt werden. Es ist dabei also grundsätzlich auch möglich, dass die Beutelfolie und der separate Folienabschnitt beide aus Materialien gebildet sind, welche gemeinsam recycelt werden können. So ist es beispielsweise möglich, die Beutelfolie und den separaten Folienabschnitt aus Polypropylen zu bilden, wobei der Unterschied der Dichte durch Füllstoffe und/oder unterschiedliche Typen von Polypropylen erreicht wird. Wenn dann der Folienabschnitt an dem versiegelten Bereich nicht mit einem Aufdruck versehen ist, können diese Abschnitte auch mit der Beutelfolie recycelt werden, wobei dann keine Beeinträchtigungen durch die Druckfarbe zu befürchten sind.

Alternativ kann der Folienabschnitt auch durch einen Formschluss an dem Beutelkörper bzw. der Beutelfolie befestigt sein. So ist es beispielsweise möglich, an den Längssiegelnähten Schlitze zu bilden, und dann den separaten Folienabschnitt in Form einer umfangsseitig geschlossenen Banderole durch diese Schlitze durchzuführen. Bei einem Zerkleinern des Folienbeutels sind dann die Materialien vollständig voneinander trennbar. Ein Formschluss kann alternativ auch dadurch erreicht werden, dass der Beutelkörper auf der Höhe des Folienabschnittes umfangsseitig eine Einschnürung aufweist, so dass dann ein in Form einer Banderole umfangsseitig geschlossener Folienabschnitt alleine durch die Form des Beutelkörpers selbst gehalten ist.

Des Weiteren besteht auch die Möglichkeit, die Beutelfolie an Längssiegelnähten mit Öffnungen zu versehen, wobei dann durch diese Öffnungen hindurch eine innenliegende Seite des Folienabschnittes mit sich selbst versiegelt oder gegebenenfalls verklebt werden kann. Im Rahmen einer solchen Ausgestaltung ist die Ausgestaltung des Folienabschnittes als umlaufende Banderole lediglich optional. Beispielsweise kann auch vorgesehen sein, dass der Folienabschnitt im Wesentlichen an einer der beiden Frontwände angeordnet ist und die Seitenränder lediglich mit seinen Enden übergreift, um dann in der beschriebenen Weise durch Öffnungen in den Längssiegelnähten mit sich selbst verbunden zu werden.

Ebenso können durch diese Öffnungen ein vorderer und ein hinterer Folienzettel zu einem umlaufenden Folienabschnitt miteinander verbunden werden. Dabei können die unverbundenen Außenkanten der Folienzettel auch über die Seitenränder der Beutelfolie hinausstehen.

Im Rahmen der Erfindung können die Beutelfolie und der Folienabschnitt maschinell aufgrund der unterschiedlichen Dichte getrennt werden. Des Weiteren kann aber auch vorgesehen sein, dass die Trennung bereits durch einen Benutzer erfolgt, so dass dann die unterschiedlichen Folien von vornherein getrennt entsorgt werden können. Eine nachträgliche maschinelle Trennung kann dann entfallen. Darüber hinaus werden die ökologischen Vorteile der Erfindung damit einem Benutzer sofort ersichtlich.

Bei einer stoffschlüssigen Verbindung durch Heißsiegeln oder durch Klebstoff kann vorgesehen werden, dass diese Verbindung von einem Benutzer aufgezogen werden kann, so dass eine sogenannte peelbare Verbindung bereitgestellt wird. Alternativ können bei der Befestigung des Folienabschnittes im Bereich der Seitenränder auch unmittelbar an den Seitenrändern Schwächungslinien gebildet werden, an denen der größte Teil des Folienabschnittes von dem Beutelkörper abgerissen werden kann. Es verbleiben dann lediglich kleine Reste des Folienabschnittes an den Seitenrändern, an dem dann keine Materialtrennung möglich ist.

Wie bereits eingangs beschrieben handelt es sich bei dem Folienbeutel vorzugsweise um einen Folienverpackungsbeutel, so dass dann der Beutelkörper zur Bildung einer luftdichten Verpackung verschlossen ist. Ein solcher Folienbeutel in Form eines Folienverpackungsbeutels kann auch mit einem Wiederverschlusselement versehen sein. Dabei kann es sich beispielsweise um einen Zipper- oder Slider-Verschluss sowie um eine Ausgießtülle handeln. Entsprechende Elemente können gegebenenfalls sortenrein mit dem Beutelkörper gefertigt werden oder so ausgeführt sein, dass diese sich bei einem Zerkleinern von der Beutelfolie trennen oder als Reststoff zurück bleiben.

Die Beutelfolie weist bevorzugt eine Dicke von 125 µm und 250 µm, vorzugsweise zwischen 150 µm und 220 µm auf. Bei den bevorzugten Polyolefinen ergibt sich eine Dichte, welche typischerweise zwischen 0,89 g/cm³ und 0,95 g/cm³ liegt, so dass dann die Beutelfolie im Rahmen der Erfindung vorzugsweise eine geringere Dichte als der Folienabschnitt aufweist.

Die Dichte des Folienabschnittes liegt üblicherweise zwischen 0,91 g/cm³ und 1,20 g/cm³. Besonders bevorzugt ist die Dichte des Folienabschnittes größer als 1 g/cm³ und insbesondere größer als 1,02 g/cm³, so dass dann eine Trennung von der Beutelfolie auf besonders einfache Weise in einem Wasserbad möglich ist. Während die Partikel der Beutelfolie aufschwimmen, sinken nach einem Zerkleinern die Partikel des Folienabschnitts mit der Dichte größer 1 g/cm³ ab, weshalb die Separation in einem einfachen Wassertank erfolgen kann. Eine Dichte von mehr als 1 g/cm³ kann insbesondere durch den Einsatz von Polyethylenterephthalat in zumindest einer Schicht des Folienabschnitts erreicht werden.

Bei dem Folienabschnitt handelt es sich vorzugsweise um eine mehrschichtige Kaschierfolie, wobei der Aufdruck dann auch geschützt an einem innenliegenden Schichtübergang angeordnet sein kann. Vorzugsweise weist der Folienabschnitt in Richtung des Beutelkörpers eine heißsiegelbare Schicht aus Polyolefin und an seiner gegenüberliegenden Seite eine Außenschicht aus Polyethylenterephthalat auf. Die Anteile der unterschiedlichen Polymere sind dann vorzugsweise so zu wählen, dass die gesamte Dichte des Folienabschnitts größer als 1 g/cm³ ist. Darüber hinaus ist es auch möglich, die Dichte des Folienabschnitts durch die Zugabe von Füllstoffen wie CaCO₃ oder andere Partikel zu erhöhen.

Auch wenn der Folienabschnitt von einer mehrschichtigen Kaschierfolie gebildet ist, sind Ausgestaltungen denkbar, bei denen versiegelte Bereiche zwischen dem Folienabschnitt und der Beutelfolie gemeinsam mit der Beutelfolie recycelt werden können. Dazu kann vorgesehen sein, dass die Kaschierfolie an Rändern, an denen eine Versiegelung mit dem Beutelkörper erfolgt, nur die heißsiegelbare Schicht aufweist. Dazu kann beispielsweise vorgesehen sein, dass bei der Kaschierung eine Außenschicht, die beispielsweise aus Polyethylenterephthalat (PET) gebildet ist, ausgespart oder zumindest nicht verbunden wird. Hierzu kann beispielsweise dort, wo nachfolgend Siegelnähte gebildet werden sollen, ein Dehäsivlack vorgesehen sein, welcher eine Verbindung der heißsiegelbaren Schicht und der Außenschicht vermeidet. Alternativ ist es auch möglich, dort den Kaschierkleber auszusparen.

Durch die beschriebenen Maßnahmen wird erreicht, dass dann an nachträglich gebildeten Heißsiegelnähten eine sortenreine Verbindung vorliegt, die mit der Beutelfolie entsorgt werden kann. Die nicht verbundenen Abschnitte der Außenschicht können wahlweise an der Kaschierfolie verbleiben oder auch durch geeignete Maßnahmen abgetrennt werden.

Im Rahmen einer solchen Ausgestaltung kommen für den Folienabschnitt dann - wie zuvor beschrieben - auch ähnliche Polymere wie für die Beutelfolie in Betracht, wobei die Differenz der Dichte durch die Zugabe von Füllstoffen erreicht wird.

Die Erfindung wird im Folgenden anhand einer lediglich ein Ausführungsbeispiel darstellenden Zeichnung erläutert. Es zeigen:
- Fig. 1: einen Folienbeutel mit einem Beutelkörper aus einer Beutelfolie sowie einen separaten Folienabschnitt,
- Fig. 2: den Folienbeutel gemäß der Fig. 1 in einer Seitenansicht,
- Fig. 3 und Fig. 4: alternative Ausgestaltungen des Folienbeutels in einer Ansicht entsprechend der Fig. 1,
- Fig. 5 und Fig. 6: alternative Ausgestaltungen des Folienbeutels in einem Horizontalschnitt,
- Fig. 7: den Schichtaufbau des zusätzlichen Folienabschnitts.

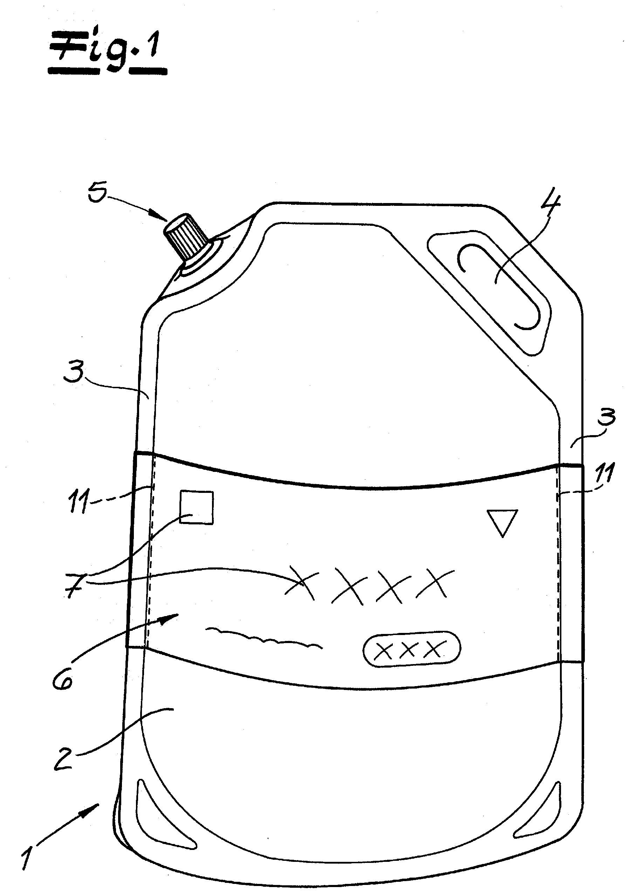

Die Fig. 1 zeigt einen Folienbeutel in Form eines dicht verschlossenen Folienverpackungsbeutels mit einem selbsttragenden Beutelkörper 1, der zwei von einer Beutelfolie gebildete, gegenüberliegende Frontwände 2 und eine nicht dargestellte Bodenfalte aufweist. Die Frontwände 2 werden von einem oberen Beutelrand, einem unteren Beutelrand und Seitenrändern begrenzt, wobei die Frontwände 2 umfangsseitig miteinander versiegelt sind, wozu entlang der Seitenränder Längssiegelnähte 3 verlaufen. Gemäß dem konkreten Ausführungsbeispiel weist der Beutelkörper 1 einen abgesiegelten Bereich mit einem eingestanzten Tragegriff 4 auf, wobei an einer an dem oberen Beutelrand gegenüberliegenden Ecke des Beutelkörpers 1 ein Wiederverschluss 5 in Form einer Tülle eingesiegelt ist.

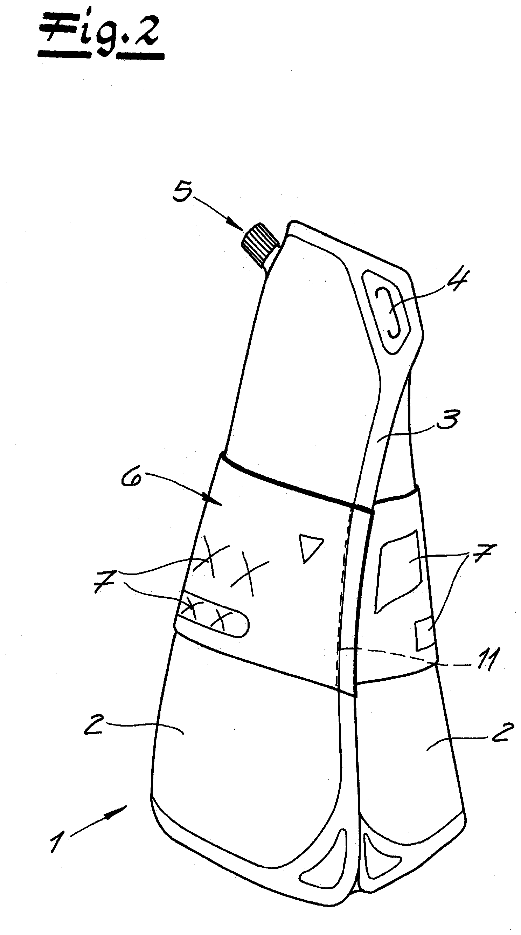

Der Folienbeutel weist einen mit einem Aufdruck versehenen Folienabschnitt 6 auf, der nur an den Längssiegelnähten 3 mit der die Frontwände 2 bildenden Beutelfolie verbunden ist. Der Folienabschnitt 6 ist gemäß der Fig. 2 an beiden Frontwänden 2 vorgesehen und bildet eine Art Banderole.

Der Beutelkörper 1 ist selbst nicht bedruckt und kann entweder transparent bzw. durchscheinend oder einfarbig eingefärbt sein. Sämtliche Markierungen und Hinweise sind auf dem Folienabschnitt 6 angebracht. Während an dem separaten Folienabschnitt 6 der Aufdruck 7 mit einer besonders hohen Qualität verwirklicht sein kann, ist der Beutelkörper 1 nicht mit Druckfarbe versehen, was sowohl hinsichtlich der Herstellung als auch einem Recycling von Vorteil ist.

Bei einer maschinellen Zerkleinerung bilden die Frontwände 2 einerseits und der Folienabschnitt 6 andererseits voneinander getrennte Partikel, da der Folienabschnitt 6 zwischen den Längssiegelnähten 3 nicht mit der darunterliegenden Frontwand 2 verbunden ist. Lediglich an den Längssiegelnähten 3 kann die die Frontwände 2 bildende Beutelfolie nicht von dem Folienabschnitt 6 getrennt werden.

Der Folienabschnitt 6 weist sowohl zu dem oberen Beutelrand als auch zu dem unteren Beutelrand einen Abstand auf, der üblicherweise zumindest 1 cm, vorzugsweise zumindest 5 cm beträgt. Darüber hinaus weist der Folienabschnitt lediglich eine Dicke zwischen 20 µm und 170 µm, vorzugsweise zwischen 30 µm und 60 µm auf, so dass nur ein relativ geringer Materialeinsatz für den Folienabschnitt 6 notwendig ist.

Dabei wird der Erkenntnis Rechnung getragen, dass für die Bereitstellung eines hochwertigen Aufdrucks 7 im besonderen Maße mehrschichtig kaschierte Folien geeignet sind, bei denen der Aufdruck innenseitig angeordnet ist und die vorzugsweise auch aus unterschiedlichen Materialien hergestellt werden. Sowohl aufgrund der unterschiedlichen Materialien als auch aufgrund der Druckfarbe des Aufdruckes 7 ist eine Wiederverwertung bei einem Recycling nicht oder nur sehr begrenzt möglich, weshalb entsprechende Materialien häufig nur thermisch durch eine Verbrennung genutzt werden. Im Rahmen der Erfindung wird durch den vergleichsweise dünnen und sich nur über einen Teil des Beutelkörpers 3 erstreckenden Folienabschnitts 6 der Anteil eines solchen nicht oder nur schwer wiederverwertbaren Materials reduziert.

Vor diesem Hintergrund ist auch vorgesehen, dass die Beutelfolie und der Folienabschnitt 6 eine unterschiedliche Dichte mit einer Differenz von zumindest 0,02 g/cm³ aufweist. Die Materialien können also durch geeignete Fluidverfahren voneinander getrennt werden. Im einfachsten Fall kann aufgrund der unterschiedlichen Dichte eine Separation in einem Flüssigkeitsbad erfolgen.

Wenn beispielsweise gemäß einer bevorzugten Ausgestaltung der Erfindung die Beutelfolie eine Dichte größer 1 g/cm³ und der Folienabschnitt eine Dichte größer 1 g/cm³ aufweisen, kann die Trennung in einem einfachen Wasserbad durch ein Schwimm-Sink-Verfahren erfolgen.

Alternativ kann ein Trennen auch durch ein Windsichten mittels eines Luftstroms erfolgen, wobei dann die Trenngrenze hinsichtlich der Dichte in einem gewissen Maße variiert werden kann.

Ein Windsichten ist je nach Verfahrensführung unabhängig von einer unterschiedlichen Dichte auch dann möglich, wenn die Beutelfolie und der Folienabschnitt 6 eine deutlich voneinander unterschiedliche Dicke aufweisen.

Vor diesem Hintergrund ist im Rahmen des Ausführungsbeispiels auch vorgesehen, dass der Folienabschnitt 6 an zumindest einer der Frontwände mit einem Abstand zu dem oberen Beutelrand und dem unteren Beutelrand angeordnet ist, wobei der Folienabschnitt 6 ausgehend von einer Dicke zwischen 20 µm und 100 µm deutlich dünner als die Beutelfolie ist. Das Verhältnis der Dicke der Beutelfolie zu der Dicke des Folienabschnitts 6 ist größer als 2:1.

Während die den Beutelkörper 1 bildende Beutelfolie vorzugsweise sortenrein ist, ist der zusätzliche Folienabschnitt 6 vorzugsweise mehrschichtig kaschiert.

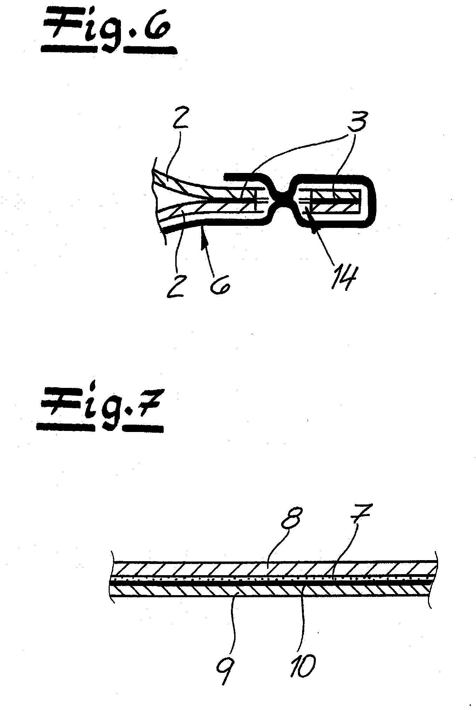

Die Fig. 7 zeigt exemplarisch einen bevorzugten Schichtaufbau, wobei der Folienabschnitt in Richtung einer Beutelaußenseite eine Außenschicht 8 aus PET und an der gegenüberliegenden Seite eine heißsiegelbare Schicht aus Polyethylen aufweist. Gemäß der Fig. 7 ist der Aufdruck 7 innenliegend an der Außenschicht 8 angeordnet, wobei die Außenschicht 8 und die heißsiegelbare Schicht 9 durch einen Kaschierklebstoff 10, beispielsweise einen 2 K-PUR-Klebstoff, verbunden sind.

Bei der konkreten Ausführungsform der Fig. 1 ist der über beide Frontwände 2 verlaufende Folienabschnitt 6 in die Längssiegelnähte 3 eingebunden und dort mit dem Beutelkörper 1 fest versiegelt.

Unmittelbar benachbart zu den Längssiegelnähten 3 weist der Folienabschnitt 6 Schwächungslinien 11 auf, die mit einem Laser gebildet oder auch als Perforation ausgeführt sein können. Entlang der Schwächungslinien 11 kann zumindest ein Großteil des Folienabschnitts 6 von einem Benutzer auch manuell von dem Beutelkörper 1 abgerissen werden, so dass dann von vornherein bereits eine getrennte Entsorgung nach einer Benutzung möglich ist. Es ergibt sich dadurch auch dann eine verbesserte Trennung, wenn der Folienbeutel nicht nachträglich für ein Recycling zerkleinert wird. Darüber hinaus erkennt ein Benutzer auch unmittelbar die ökologischen Vorteile des erfindungsgemäßen Folienbeutels.

Da im Rahmen der Erfindung der Aufdruck auf den separaten Folienabschnitt 6 begrenzt ist, ist auch eine besonders leichte Anpassung für verschiedene Inhaltsstoffe, Vertriebsgebiete oder dergleichen möglich.

Gemäß der Fig. 1 verbleiben auch nach einem Zerkleinern noch verbundene Bereiche, an denen der Folienabschnitt 6 und der Beutelkörper 1 verbunden bleiben. Davon ausgehend könnte eine vollständige Trennung ermöglicht werden, wenn der Folienabschnitt 6 abtrennbar an den Längssiegelnähten 3 versiegelt ist.

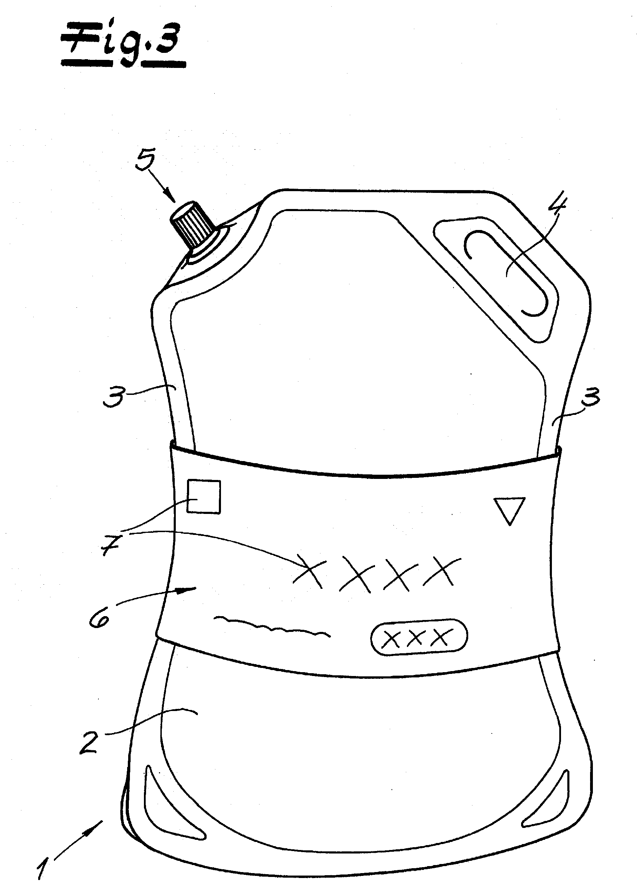

Alternativ zeigt die Fig. 3 eine Ausgestaltung, bei der der Beutelkörper 1 selbst auf der Höhe des separaten Folienabschnittes 6 eine Einschnürung aufweist, so dass dann der Folienabschnitt 6 als umfangsseitig angeordnete Banderole alleine aufgrund der Beutelform unverlierbar gehalten ist. Im Rahmen einer solchen Ausgestaltung kann dann der Folienabschnitt 6 in Form der Banderole nach einer Entleerung des Beutelkörpers 1 auf einfache Weise von einem Benutzer von dem Beutelkörper 1 abgezogen werden, wobei auch bei einer maschinellen Zerkleinerung eine vollständige Trennung erfolgt.

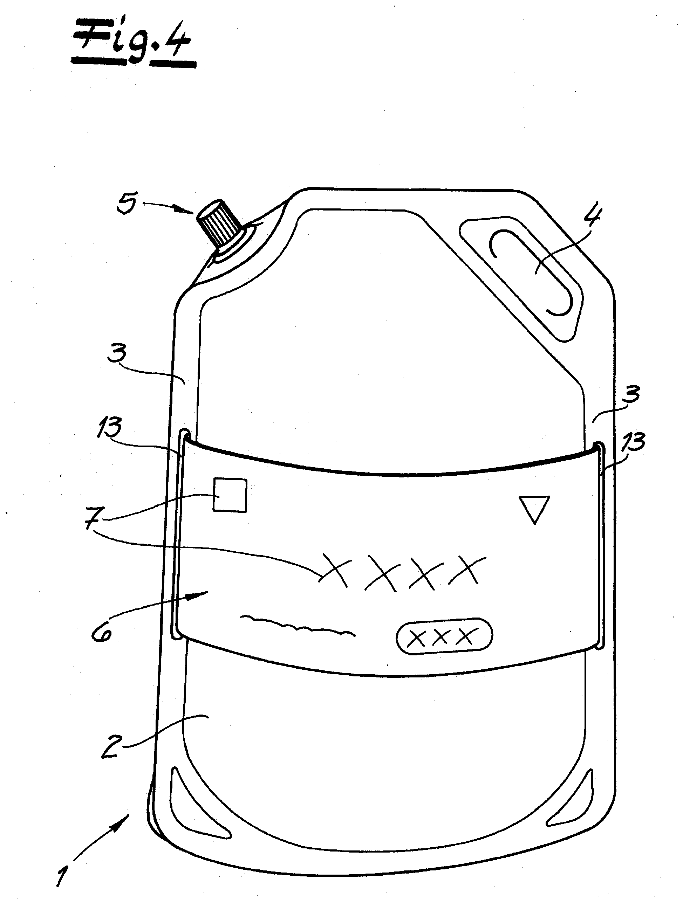

Die Fig. 4 zeigt davon ausgehend eine weitere Variante, bei der die Längssiegelnähte 3 mit Schlitzen 13 versehen sind, durch welche sich dann der Folienabschnitt 6 nach Art einer Banderole hindurcherstreckt. Die gemäß der Fig. 3 vorgesehene Einschnürung ist dann nicht notwendig.

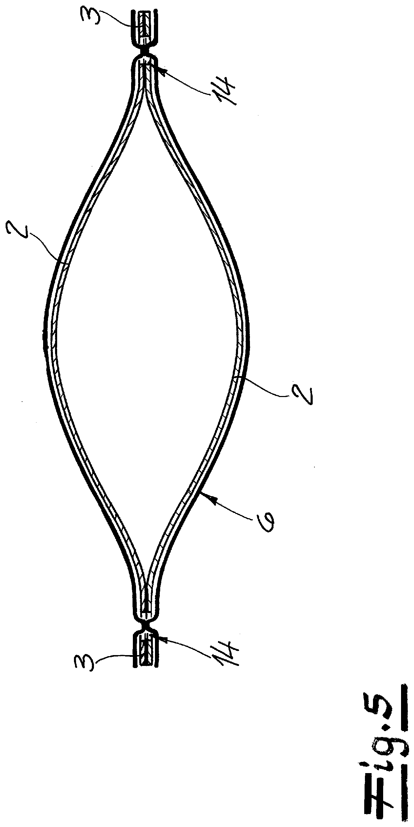

Weitere Varianten zur Befestigung des Folienabschnitts 6 an dem Beutelkörper 1 werden anhand der Figuren 5 und 6 erläutert, wobei jeweils ein horizontaler Querschnitt dargestellt ist.

Die grundlegende Form des Folienabschnitts 6 und des Beutelkörpers 1 sowie deren Größenverhältnisse sollen dabei ausgehend von den zuvor beschriebenen Ausführungen unverändert bleiben.

Gemäß der Fig. 5 weisen die Frontwände 2 im Bereich der Längsnähte 3 Öffnungen 14 auf. Der Folienabschnitt 6 ist durch einen vorderen und hinteren Folienzettel gebildet, die unter Formung einer umlaufenden Banderole durch die Öffnungen 14 hindurch miteinander verbunden sind. Die unverbundenen Seitenränder der Folienzettel stehen seitlich über die Öffnungen 14 hinweg und fluchten in etwa mit den seitlichen Rändern der Beutelfolie 1.

Gemäß einer Variante hiervon ist der Folienabschnitt als eine den Beutelkörper umschlingende umlaufende Banderole aus einem einzigen Folienstück geformt, wobei an einer der Frontwände, welche eine Rückseite bildet, der Folienabschnitt mit einer Flossennaht umfangsseitig geschlossen ist. Alternativ kann ein umfangsseitiger Verschluss des Folienabschnittes beispielsweise auch durch Klebstoff erfolgen.

Die eigentliche Befestigung an den Beutelkörper erfolgt hier auch dadurch, dass die Frontwände im Bereich der Längsnähte Öffnungen aufweisen, wobei durch diese Öffnungen hindurch der gemäß der Fig. 7 ausgeführte Folienabschnitt an seiner heißsiegelbaren Schicht mit sich selbst versiegelt ist. Hierbei ergibt sich ebenfalls der Vorteil, dass der Folienabschnitt nicht durch zugeordnete Schlitze in den Längssiegelnähten gefädelt werden muss.
In einer Variante hiervon zeigt die Fig. 6 dass auch auf einfache Weise ein Folienabschnitt 6 bereitgestellt werden kann, der sich im Wesentlichen nur an einer der beiden Frontwände 2 erstreckt. Die Ränder des Folienabschnitts 6 umgreifen dann die Seitenränder und sind durch die Öffnungen 14 fixiert.

In einer Variante hierzu kann der den Seitenrand umgreifende Teil des Folienabschnittes auch durch einen weiteren schmaleren Folienzettel ersetzt werden, welcher sich nicht über die gesamte Breite der Rückwand, sondern lediglich im Bereich der Öffnung 14 erstreckt. Hierdurch kann ebenfalls eine ausreichende Befestigung eines einseitig angebrachten Folienabschnitts gewährleistet werden.

## Patentansprüche

1. Folienbeutel mit einem Beutelkörper (1) und mit einem zusätzlichen, mit einem Aufdruck versehenden Folienabschnitt (6), der an einer Beutelaußenseite auf dem Beutelkörper (1) angeordnet ist, wobei der Beutelkörper (1) zumindest zwei aneinander gegenüberliegende Frontwände (2) aus einer Beutelfolie aufweist, welche von einem oberen Rand, einem unteren Rand und Seitenrändern begrenzt sind und wobei der Folienabschnitt (6) und die Beutelfolie nicht vollflächig miteinander verbunden sind, wobei der Folienabschnitt (6) an zumindest einer der Frontwände (2) mit einem Abstand zu dem oberen Beutelrand und dem unteren Beutelrand angeordnet ist, **dadurch gekennzeichnet, dass** der Folienabschnitt (6) eine Dicke zwischen 20 µm und 100 µm aufweist und dass das Verhältnis der Dicke der Beutelfolie zu der Dicke des Folienabschnitts (6) größer als 2:1 ist, wobei die Beutelfolie eine Dichte zwischen 0,89 g/cm³ und 0,95 g/cm³.

2. Folienbeutel nach Anspruch 1, **dadurch gekennzeichnet, dass** sich der Folienabschnitt (6) an zumindest einer der Frontwände (2) über die gesamte Breite zwischen den Seitenrändern erstreckt.

3. Folienbeutel nach Anspruch 2, **dadurch gekennzeichnet, dass** der Folienabschnitt (6) und die zumindest eine darunter angeordnete Frontwand (2) zwischen den Seitenrändern unverbunden sind.

4. Folienbeutel nach einem der Ansprüche 1 bis 3, **dadurch gekennzeichnet, dass** sich der Folienabschnitt (6) an beiden Frontwänden (2) erstreckt.

5. Folienbeutel nach einem der Ansprüche 1 bis 4, **dadurch gekennzeichnet, dass** der Folienabschnitt (6) an Längssiegelnähten (3) befestigt ist, die entlang der Seitenränder verlaufen.

6. Folienbeutel nach einem der Ansprüche 1 bis 5, **dadurch gekennzeichnet, dass** der Folienabschnitt (6) formschlüssig an dem Beutelkörper (1) befestigt ist.

7. Folienbeutel nach einem der Ansprüche 1 bis 6, **dadurch gekennzeichnet, dass** der Folienabschnitt (6) zumindest eine Schwächungslinie (11) aufweist, wobei zumindest ein Teil des Folienabschnitts (6) durch ein Auftrennen der zumindest einen Schwächungslinie (11) von dem Beutelkörper (1) entfernbar ist.

8. Folienbeutel nach einem der Ansprüche 1 bis 7, **dadurch gekennzeichnet, dass** der Beutelkörper (1) zur Bildung einer luftdichten Verpackung verschlossen ist.

9. Folienbeutel nach Anspruch 8, **dadurch gekennzeichnet, dass** an dem Beutelkörper (1) ein Wiederverschlusselement (5) angeordnet ist.

10. Folienbeutel nach einem der Ansprüche 1 bis 9, **dadurch gekennzeichnet, dass** die Beutelfolie sortenrein aus einem Polyolefin gebildet und bevorzugt unbedruckt ist.

11. Folienbeutel nach einem der Ansprüche 1 bis 10, **dadurch gekennzeichnet, dass** die Beutelfolie eine Dicke zwischen 125 µm und 250 µm aufweist.

12. Folienbeutel nach einem der Ansprüche 1 bis 11, **dadurch gekennzeichnet, dass** der Folienabschnitt (6) eine Dichte größer als 1 g/cm³ aufweist.

13. Folienbeutel nach einem der Ansprüche 1 bis 11, **dadurch gekennzeichnet, dass** der Folienabschnitt (6) eine mehrschichtige Kaschierfolie ist, wobei der Aufdruck (7) vorzugsweise an einem innenliegenden Schichtübergang angeordnet ist.

14. Folienbeutel nach Anspruch 12, **dadurch gekennzeichnet, dass** der Folienabschnitt (6) in Richtung des Beutelkörper (1) eine heißsiegelbare Schicht (9) aus Polyolefin und an seiner gegenüberliegenden Seite eine Außenschicht (8) aus Polyethylenterephthalat (PET) aufweist.

15. Folienbeutel nach einem der Ansprüche 1 bis 13, **dadurch gekennzeichnet, dass** die Frontwände (2) im Bereich zumindest einer Längsnaht (3) eine Öffnung (14) aufweist, durch die sich der Folienabschnitt (6) erstreckt.

16. Folienbeutel nach Anspruch 14, **dadurch gekennzeichnet, dass** der Folienabschnitt (6) durch zumindest zwei separate Folienzettel gebildet ist, welche durch die Öffnung (14) hindurch miteinander verbunden sind.

## Claims

1. A film bag having a bag body (1) and having an additional film portion (6) to be provided with an imprint, which film portion is arranged on a bag outer side on the bag body (1), wherein the bag body (1) has at least two mutually opposite front walls (2) made of a bag film, which are delimited by an upper edge, a lower edge and lateral edges and wherein the film portion (6) and the bag film are not joined together all over, wherein the film portion (6) is arranged on at least one of the front walls (2) with a spacing from the upper bag edge and the lower bag edge, **characterized in that** the film portion (6) has a thickness between 20 µm and 100 µm and that the ratio of the thickness of the bag film to the thickness of the film portion (6) is greater than 2:1, wherein the bag film has a density between 0.89 g/cm³ and 0.95 g/cm³.

2. The film bag according to claim 1, **characterized in that** the film portion (6) on at least one of the front walls (2) extends over the entire width between the lateral edges.

3. The film bag according to claim 2, **characterized in that** the film portion (6) and the at least one front wall (2) arranged thereunder are not connected between the lateral edges.

4. The film bag according to one of claims 1 to 3, **characterized in that** the film portion (6) extends on both front walls (2).

5. The film bag according to one of claims 1 to 4, **characterized in that** the film portion (6) is fastened at longitudinal seal seams (3) which run along the lateral edges.

6. The film bag according to one of claims 1 to 5, **characterized in that** the film portion (6) is fastened positively on the bag body (1).

7. The film bag according to one of claims 1 to 6, **characterized in that** the film portion (6) has at least one line of weakness (11), wherein at least one part of the film portion (6) can be removed by separating the at least one line of weakness (11) from the bag body (1).

8. The film bag according to one of claims 1 to 7, **characterized in that** the bag body (1) is closed to form an airtight package.

9. The film bag according to claim 8, **characterized in that** a reclosure element (5) is arranged on the bag body (1).

10. The film bag according to one of claims 1 to 9, **characterized in that** the bag film is formed homogeneously from a polyolefin and preferably is unprinted.

11. The film bag according to one of claims 1 to 10, **characterized in that** the bag film has a thickness between 125 µm and 250 µm.

12. The film bag according to one of claims 1 to 11, **characterized in that** the film portion (6) has a density greater than 1 g/cm³.

13. The film bag according to one of claims 1 to 12, **characterized in that** the film portion (6) is a multilayer laminated film, wherein the imprint (7) is preferably arranged at an internal layer transition.

14. The film bag according to claim 13, **characterized in that** the film portion (6) in the direction of the bag body (1) has a heat-sealable layer (9) of polyolefin and on its opposite side an outer layer (8) of polyethylene terephthalate (PET).

15. The film bag according to one of claims 1 to 14, **characterized in that** the front walls (2) in the region of at least one longitudinal seam (3) have an opening (14) through which the film portion (6) extends.

16. The film bag according to claim 15, **characterized in that** the film portion (6) is formed by at least two separate film labels, which are joined together through the opening (14).

## Revendications

1. Sachet en film comprenant un corps de sachet (1) et comprenant un tronçon de film (6) supplémentaire doté d'une impression, qui est disposé sur une face extérieure de sachet sur le corps de sachet (1), dans lequel le corps de sachet (1) présente au moins deux parois avant (2) opposées entre elles d'un film de sachet, qui sont délimitées par un bord supérieur, un bord inférieur et des bords latéraux et dans lequel le tronçon de film (6) et le film de sachet ne sont pas reliés entre eux sur toute la surface, dans lequel le tronçon de film (6) est disposé contre au moins une des parois avant (2) à une distance du bord de sachet supérieur et du bord de sachet inférieur, **caractérisé en ce que** le tronçon de film (6) présente une épaisseur entre 20 µm et 100 µm et que le rapport de l'épaisseur du sachet de film à l'épaisseur du tronçon de film (6) est supérieur à 2:1, dans lequel le film de sachet présente une épaisseur entre 0,89 g/cm³ et 0,95 g/cm³.

2. Sachet en film selon la revendication 1, **caractérisé en ce que** le tronçon de film (6) contre au moins une des parois avant (2) s'étend sur toute la largeur entre les bords latéraux.

3. Sachet en film selon la revendication 2, **caractérisé en ce que** le tronçon de film (6) et l'au moins une paroi avant (2) disposée dessous sont non reliés entre les bords latéraux.

4. Sachet en film selon l'une des revendications 1 à 3, **caractérisé en ce que** le tronçon de film (6) s'étend contre les deux parois avant (2).

5. Sachet en film selon l'une des revendications 1 à 4, **caractérisé en ce que** le tronçon de film (6) est fixé à des soudures longitudinales (3) qui passent le long des bords latéraux.

6. Sachet en film selon l'une des revendications 1 à 5, **caractérisé en ce que** le tronçon de film (6) est fixé au corps de sachet (1) par complémentarité de forme.

7. Sachet en film selon l'une des revendications 1 à 6, **caractérisé en ce que** le tronçon de film (6) présente au moins une ligne d'affaiblissement (11), dans lequel au moins une partie du tronçon de film (6) peut être enlevée du corps de sachet (1) en défaisant l'au moins une ligne d'affaiblissement (11).

8. Sachet en film selon l'une des revendications 1 à 7, **caractérisé en ce que** le corps de sachet (1) est fermé pour former un emballage étanche à l'air.

9. Sachet en film selon la revendication 8, **caractérisé en ce qu'**un élément de re-fermeture (5) est disposé sur le corps de sachet (1).

10. Sachet en film selon l'une des revendications 1 à 9, **caractérisé en ce que** le film de sachet est formé dans un même type en polyoléfine et est de préférence non imprimé.

11. Sachet en film selon l'une des revendications 1 à 10, **caractérisé en ce que** le film de sachet présente une épaisseur entre 125 µm et 250 µm.

12. Sachet en film selon l'une des revendications 1 à 11, **caractérisé en ce que** le tronçon de film (6) présente une épaisseur supérieur à 1 g/cm³.

13. Sachet en film selon l'une des revendications 1 à 12, **caractérisé en ce que** le tronçon de film (6) est un film pelliculé multicouches, dans lequel l'impression (7) est disposée de préférence contre une transition intérieure entre couches.

14. Sachet en film selon la revendication 13, **caractérisé en ce que** le tronçon de film (6) présente une couche (9) thermosoudable en polyoléfine en direction du corps de sachet (1) et une couche extérieure (8) en polyéthylène téréphtalate (PET) sur son côté opposé.

15. Sachet en film selon l'une des revendications 1 à 14, **caractérisé en ce que** les parois avant (2) présentent une ouverture (14) au niveau d'au moins un cordon longitudinal (3), à travers laquelle le tronçon de film (6) s'étend.

16. Sachet en film selon la revendication 15, **caractérisé en ce que** le tronçon de film (6) est formé par au moins deux morceaux de film séparés qui sont reliés entre eux à travers l'ouverture (14).
